# EUROPEAN PATENT SPECIFICATION

(11) **EP 4 272 054 B1**
(45) Date of publication and mention of the grant of the patent: **16.09.2026**
(21) Application number: 21847845.1
(22) Date of filing: 21.12.2021
(51) Int. Cl.: G06F 3/01

(54) **MOTION-TO-PHOTON LATENCY AUGMENTED REALITY SYSTEMS**
SYSTEME DER ERWEITERTEN REALITÄT MIT BEWEGUNGS-ZU-PHOTONEN-LATENZ
SYSTÈMES DE RÉALITÉ AUGMENTÉE À LATENCE DE MOUVEMENT À PHOTON

(30) Priority: 30.12.2020 US 202063132055 P; 09.04.2021 US 202117301636
(43) Date of publication of application: 08.11.2023
(73) Proprietor: Snap Inc., Santa Monica, CA 90405 (US)
(72) Inventor: FINK, Heinrich, Santa Monica, California 90405 (US); BIRKLBAUER, Clemens, Santa Monica, California 90405 (US)
(74) Representative: Kramer, Dani
(86) International application number: PCT/US2021/064586
(87) International publication number: WO 2022/146780

(56) References cited:
- EP-A1- 3 439 306
- US-A1- 2015 002 542
- US-A1- 2017 115 488

## Description

### CROSS-REFERENCE

The present application is a continuation of and claims the benefit of priority to U.S. Application Serial No. 17/301,636, filed April 9, 2021, which claims priority to U.S. Provisional Patent Application Serial No. 63/132,055, filed December 30, 2020.

### TECHNICAL FIELD

The subject matter disclosed herein generally relates to a display system. Specifically, the present disclosure addresses systems and methods for reducing motion-to-photon latency in augmented reality (AR) devices.

EP 3439306 A1 describes techniques related to video coding. Such video coding techniques include applying a projective transformation to a reconstructed reference frame based on scene pose difference data indicative of a scene pose change and performing motion compensation using the reprojected reconstructed reference frame as a motion compensation reference frame.

US 2015/002542 A1 describes methods for generating and displaying images associated with one or more virtual objects within an augmented reality environment at a frame rate that is greater than a rendering frame rate.

US 2017/115488 A1 describes a method in which one or more sensors of a virtual reality device track a pose of the virtual reality device. The virtual reality device requests a virtual image having a perspective corresponding to a future pose from a remote computer.

### BACKGROUND

Augmented reality (AR) systems present virtual content to augment a user's real-world environment. For example, virtual content overlaid over a physical object can be used to create the illusion that the physical object is moving, animated, etc. An augmented reality device worn by a user continuously updates presentation of the virtual content based on the user's movements to create the illusion that the virtual content is physically present in the user's real-world environment. For example, as the user moves their head, the augmented reality device updates presentation of the virtual content to create the illusion that the virtual content remains in the same geographic position within the user's real-world environment. Accordingly, a user may move around a virtual object presented by the augmented reality device in the same way the user would a physical object.

To convincingly create the illusion that the virtual object is in the user's real-world environment, the augmented reality device has to update presentation of the virtual object almost instantaneously on movement of the device. However, virtual content can take a longer time to be updated because the AR display device has to process the environmental data, render the virtual content, and then project the virtual content. This latency can also be referred to as "motion-to-photon latency." Any perceivable motion-to-photon latency diminishes the user's experience.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 is a block diagram illustrating a network environment for operating an AR display device in accordance with one example embodiment.
FIG. 2 is a block diagram illustrating an AR display device in accordance with one example embodiment.
FIG. 3 is a block diagram illustrating a tracking system in accordance with one example embodiment.
FIG. 4 is a block diagram illustrating a display controller in accordance with one example embodiment.
FIG. 5 illustrates an example of two-dimensional shift transformation in accordance with one embodiment.
FIG. 6 is a block diagram illustrating an example process in accordance with one example embodiment.
FIG. 7 is a flow diagram illustrating a method for reducing latency in an AR display device in accordance with one example embodiment.
FIG. 8 is a flow diagram illustrating a method for reducing latency in an AR display device in accordance with one example embodiment.
FIG. 9 is block diagram showing a software architecture within which the present disclosure may be implemented, according to an example embodiment.
FIG. 10 is a diagrammatic representation of a machine in the form of a computer system within which a set of instructions may be executed for causing the machine to perform any one or more of the methodologies discussed herein, according to one example embodiment.

### DETAILED DESCRIPTION

The description that follows describes systems, methods, techniques, instruction sequences, and computing machine program products that illustrate example embodiments of the present subject matter. In the following description, for purposes of explanation, numerous specific details are set forth in order to provide an understanding of various embodiments of the present subject matter. It will be evident, however, to those skilled in the art, that embodiments of the present subject matter may be practiced without some or other of these specific details. Examples merely typify possible variations. Unless explicitly stated otherwise, structures (e.g., structural Components, such as modules) are optional and may be combined or subdivided, and operations (e.g., in a procedure, algorithm, or other function) may vary in sequence or be combined or subdivided. The scope of the invention is set out in the appended claims.

Augmented Reality (AR) applications allow a user to experience information, such as in the form of a virtual object rendered in a display of an AR display device (also referred to as a display device). The rendering of the virtual object may be based on a position of the display device relative to a physical object or relative to a frame of reference (external to the display device) so that the virtual object correctly appears in the display. The virtual object appears aligned with a physical object as perceived by the user of the AR display device. Graphics (e.g., graphical elements containing instructions and guides) appear to be attached to a physical object of interest. In order to do this, the AR display device detects the physical object and tracks a pose of the AR display device relative to a position of the physical object. A pose identifies a position and orientation of the object relative to a frame of reference or relative to another object.

One problem with implementing AR is latency associated with presenting virtual content. As the user moves the AR display device, the user's view of the real-world environment changes instantaneously. The virtual content takes a longer time to change because the AR display device has to process the environmental data with Inertial Measurement Unit (IMU) data, render the virtual content, and project the virtual content in front of the user's field of view. This latency is defined and referred hereto as the "motion-to-photon latency" (e.g., the duration between the user moving the AR display device and the presentation of its virtual content adapting to that specific motion). Motion-to-photon latency causes the virtual content to appear jittery or lagging and diminishes the user's augmented reality experience.

Previous solutions to reducing the motion-to-photon latency include using a specialized custom application-specific integrated circuit (ASIC) display controller, building a specialized FPGA display controller, and performing latency mitigation on secondary asynchronous tasks on a desktop-level graphics processing unit (GPU). These solutions do require customization and/or additional resources.

The present application describes a system and method for reducing motion-to-photon latency in AR display device using "standard" (e.g., non-customized) components. According to the invention, the present system optimizes the motion-to-photon latency of an AR display device by using a display controller of a commodity mobile system-on-chip (SoC) (e.g., a generic or non-customized display controller) asynchronously with the GPU. In other words, the computation by the display controller operates independently of the GPU (graphics processor) at the AR display device. Therefore, the system does not suffer from resource contention over GPU access between latency optimizer and other processes, as the approaches of the previous solutions would do.

The present application describes a method for reducing motion-to-photon latency in an AR display device by applying a two-dimensional shift transformation as a simplified re-projection (e.g., latency mitigation) step. Previous mobile AR display devices either used a custom-built co-processor, or used the GPU to run the reprojection step side-by-side to the 3D render workload. The former adds cost and complexity to the system, while the latter results in contention of a shared hardware resource, impacting the quality of service of both rendering and reprojection. The present application describes an AR display device that includes a non-custom display controller (as part of the normal display pipeline), and its processing runs asynchronously to the GPU, avoiding any impact of reprojection to 3D rendering.

In one example embodiment, the present application describes a method for reducing display latency in an augmented reality (AR) display device. In one aspect, the method includes generating, using a render engine of a Graphical Processing Unit (GPU) of the AR display device, an image including a rendered 3D model of the virtual content based on a first pose of the AR display device, applying, using a reprojection engine of a display controller of the AR display device, a two-dimensional transformation to the image based on a second pose to generate a transformed image, and providing the transformed image to a display of the AR display device. In one example embodiment, the two-dimensional transformation includes a two-dimensional shift operation, a two-dimensional rotation operation, and/or a two-dimensional scaling operation.

As a result, one or more of the methodologies described herein facilitate solving the technical problem of power consumption saving and efficient calibration by applying a two-dimensional transformation to an already rendered frame using a display controller based on a latest pose. The presently described method provides an improvement to an operation of the functioning of a computer by providing latency reduction. As such, one or more of the methodologies described herein may obviate a need for certain efforts or computing resources. Examples of such computing resources include Processor cycles, network traffic, memory usage, data storage capacity, power consumption, network bandwidth, and cooling capacity.

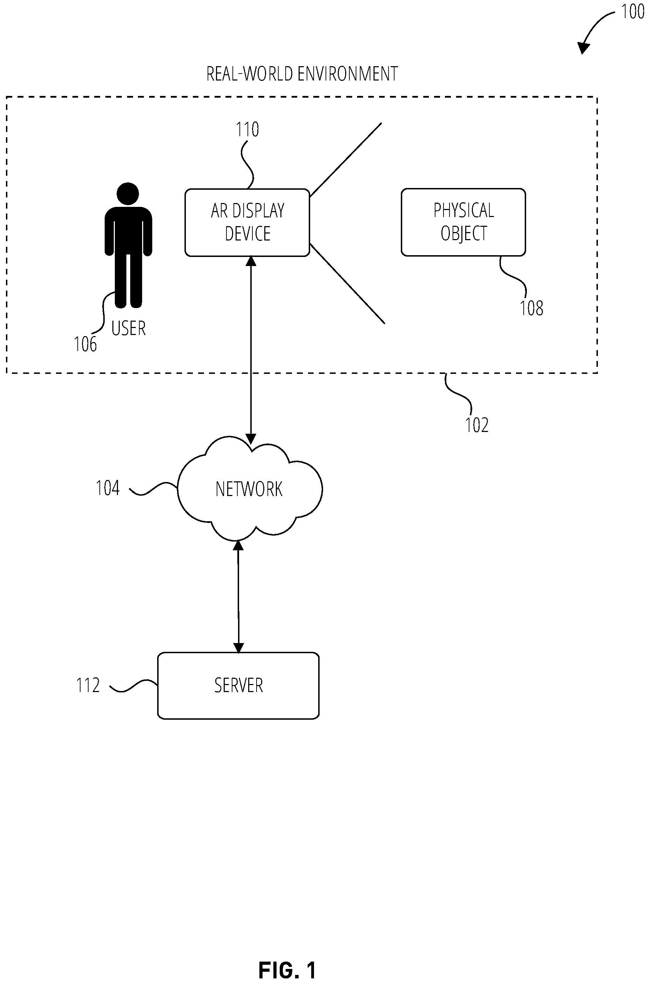

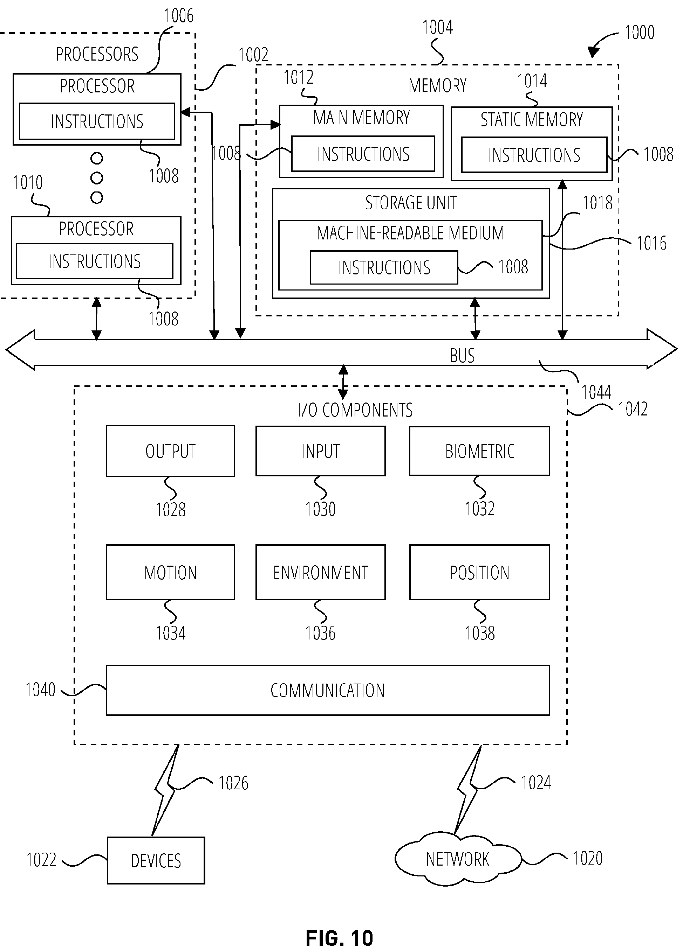

FIG. 1 is a network diagram illustrating a network environment 100 suitable for operating an AR display device 110, according to some example embodiments. The network environment 100 includes an AR display device 110 and a server 112, communicatively coupled to each other via a network 104. The AR display device 110 and the server 112 may each be implemented in a computer system, in whole or in part, as described below with respect to FIG. 10. The server 112 may be part of a network-based system. For example, the network-based system may be or include a cloud-based server system that provides additional information, such as virtual content (e.g., three-dimensional models of virtual objects) to the AR display device 110.

A user 106 operates the AR display device 110. The user 106 may be a human user (e.g., a human being), a machine user (e.g., a computer configured by a software program to interact with the AR display device 110), or any suitable combination thereof (e.g., a human assisted by a machine or a machine supervised by a human). The user 106 is not part of the network environment 100, but is associated with the AR display device 110.

The AR display device 110 may be a computing device with a display such as a smartphone, a tablet computer, or a wearable computing device (e.g., watch or glasses). The computing device may be hand-held or may be removable mounted to a head of the user 106. In one example, the display may be a screen that displays what is captured with a camera of the AR display device 110. In another example, the display of the device may be transparent such as in lenses of wearable computing glasses. In other examples, the display may be a transparent display such as a windshield of a car, plane, truck. The display may be non-transparent and wearable by the user to cover the field of vision of the user.

The user 106 operates an application of the AR display device 110. The application may include an AR application configured to provide the user 106 with an experience triggered by a physical object 108, such as a two-dimensional physical object (e.g., a picture), a three-dimensional physical object (e.g., a statue), a location (e.g., at facility), or any references (e.g., perceived corners of walls or furniture) in the real-world physical environment. For example, the user 106 may point a camera of the AR display device 110 to capture an image of the physical object 108. The image is tracked and recognized locally in the AR display device 110 using a local context recognition dataset module of the AR application of the AR display device 110. The local context recognition dataset module may include a library of virtual objects associated with real-world physical objects or references. The AR application then generates additional information corresponding to the image (e.g., a three-dimensional model) and presents this additional information in a display of the AR display device 110 in response to identifying the recognized image. If the captured image is not recognized locally at the AR display device 110, the AR display device 110 downloads additional information (e.g., the three-dimensional model) corresponding to the captured image, from a database of the server 112 over the network 104.

The AR display device 110 includes a tracking system (not shown). The tracking system tracks the pose (e.g., position and orientation) of the AR display device 110 relative to the real-world environment 102 using optical sensors (e.g., depth-enabled 3D camera, image camera), inertia sensors (e.g., gyroscope, accelerometer), wireless sensors (Bluetooth, Wi-Fi), GPS sensor, and audio sensor to determine the location of the AR display device 110 within the real-world environment 102.

In one example embodiment, the server 112 may be used to detect and identify the physical object 108 based on sensor data (e.g., image and depth data) from the AR display device 110, determine a pose of the AR display device 110 and the physical object 108 based on the sensor data. The server 112 can also generate a virtual object based on the pose of the AR display device 110 and the physical object 108. The server 112 communicates the virtual object to the AR display device 110. The object recognition, tracking, and AR rendering can be performed on either the AR display device 110, the server 112, or a combination between the AR display device 110 and the server 112.

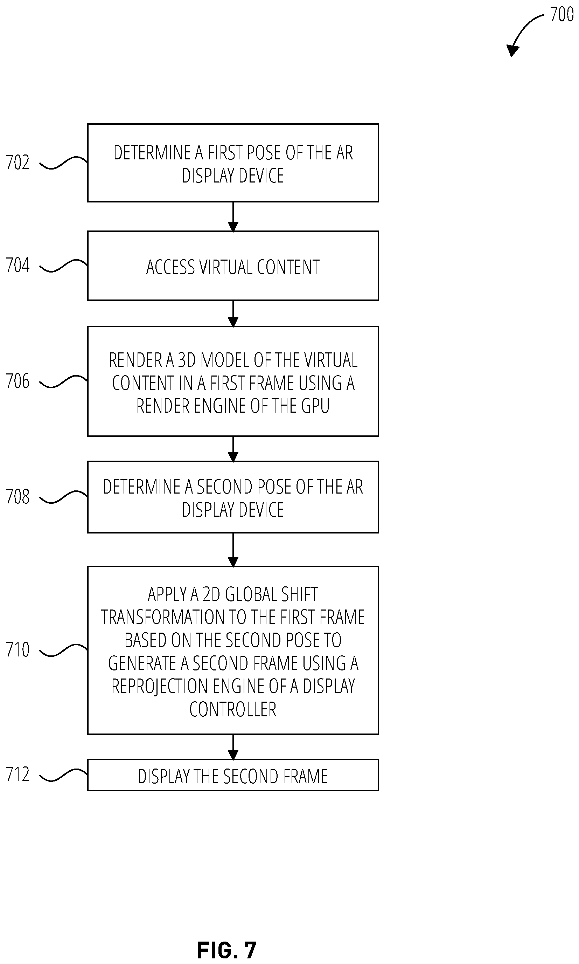

Any of the machines, databases, or devices shown in FIG. 1 may be implemented in a general-purpose computer modified (e.g., configured or programmed) by software to be a special-purpose computer to perform one or more of the functions described herein for that machine, database, or device. For example, a computer system able to implement any one or more of the methodologies described herein is discussed below with respect to FIG. 7 to FIG. 8. As used herein, a "database" is a data storage resource and may store data structured as a text file, a table, a spreadsheet, a relational database (e.g., an object-relational database), a triple store, a hierarchical data store, or any suitable combination thereof. Moreover, any two or more of the machines, databases, or devices illustrated in FIG. 1 may be combined into a single machine, and the functions described herein for any single machine, database, or device may be subdivided among multiple machines, databases, or devices.

The network 104 may be any network that enables communication between or among machines (e.g., server 112), databases, and devices (e.g., AR display device 110). Accordingly, the network 104 may be a wired network, a wireless network (e.g., a mobile or cellular network), or any suitable combination thereof. The network 104 may include one or more portions that constitute a private network, a public network (e.g., the Internet), or any suitable combination thereof.

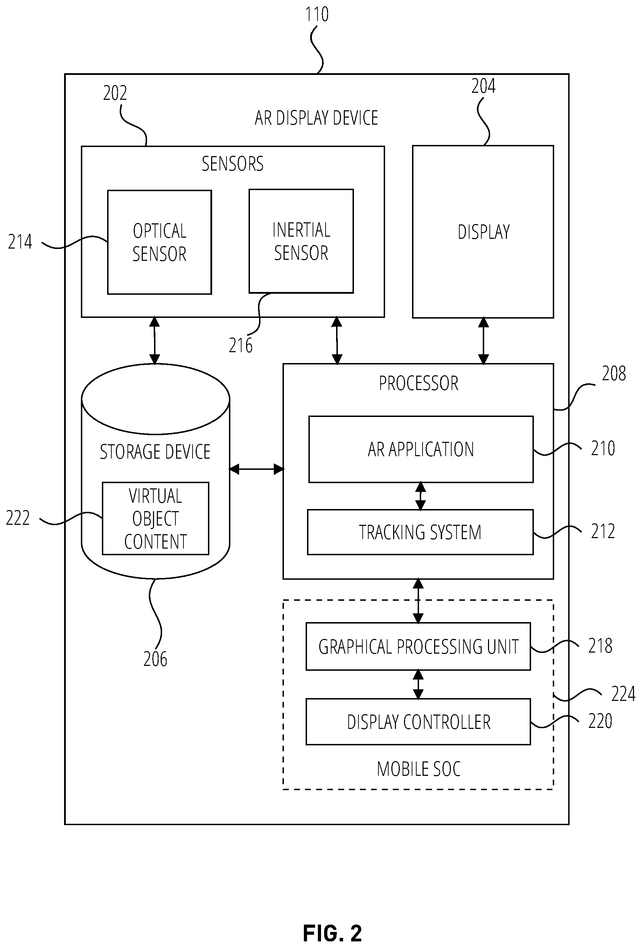

FIG. 2 is a block diagram illustrating modules (e.g., components) of the AR display device 110, according to some example embodiments. The AR display device 110 includes sensors 202, a display 204, a processor 208, a mobile SoC 224, and a storage device 206. Examples of AR display device 110 include a wearable computing device, a desktop computer, a vehicle computer, a tablet computer, a navigational device, a portable media device, or a smart phone.

The sensors 202 include, for example, an optical sensor 214 (e.g., camera such as a color camera, a thermal camera, a depth sensor and one or multiple grayscale, global shutter tracking cameras) and an inertial sensor 216 (e.g., gyroscope, accelerometer). Other examples of sensors 202 include a proximity or location sensor (e.g., near field communication, GPS, Bluetooth, Wifi), an audio sensor (e.g., a microphone), or any suitable combination thereof. It is noted that the sensors 202 described herein are for illustration purposes and the sensors 202 are thus not limited to the ones described above.

The display 204 includes a screen or monitor configured to display images generated by the processor 208. In one example embodiment, the display 204 may be transparent or semi-transparent so that the user 106 can see through the display 204 (in AR use case). In another example, the display 204, such as a LCOS display, presents each frame of virtual content in multiple presentations.

The processor 208 includes an AR application 210 and a tracking system 212. The AR application 210 detects and identifies a physical environment or the physical object 108 using computer vision. The AR application 210 retrieves a virtual object (e.g., 3D object model) based on the identified physical object 108 or physical environment. The AR application 210 renders the virtual object in the display 204. For an AR application, the AR application 210 includes a local rendering engine that generates a visualization of a virtual object overlaid (e.g., superimposed upon, or otherwise displayed in tandem with) on an image of the physical object 108 captured by the optical sensor 214. A visualization of the virtual object may be manipulated by adjusting a position of the physical object 108 (e.g., its physical location, orientation, or both) relative to the optical sensor 214. Similarly, the visualization of the virtual object may be manipulated by adjusting a pose of the AR display device 110 relative to the physical object 108. For a VR application, the AR application 210 displays the virtual object in the display 204 at a location (in the display 204) determined based on a pose of the AR display device 110.

In another example embodiment, the AR application 210 includes a contextual local image recognition module (not shown) configured to determine whether the captured image matches an image locally stored in a local database (e.g., storage device 206) of images and corresponding additional information (e.g., virtual model and interactive features) on the AR display device 110. In one example, the contextual local image recognition module retrieves a primary content dataset from the server 112 and generates and updates a contextual content dataset based on an image captured with the AR display device 110.

The tracking system 212 estimates a pose of the AR display device 110. For example, the tracking system 212 uses image data and corresponding inertial data from the optical sensor 214 and the inertial sensor 216 to track a location and pose of the AR display device 110 relative to a frame of reference (e.g., real-world environment 102). In one example, the tracking system 212 uses the sensor data to determine the three-dimensional pose of the AR display device 110. The three-dimensional pose is a determined orientation and position of the AR display device 110 in relation to the user's real-world environment 102. For example, the AR display device 110 may use images of the user's real-world environment 102, as well as other sensor data to identify a relative position and orientation of the AR display device 110 from physical objects in the real-world environment 102 surrounding the AR display device 110. The tracking system 212 continually gathers and uses updated sensor data describing movements of the AR display device 110 to determine updated three-dimensional poses of the AR display device 110 that indicate changes in the relative position and orientation of the AR display device 110 from the physical objects in the real-world environment 102. The tracking system 212 provides the three-dimensional pose of the AR display device 110 to the mobile SoC 224.

The mobile SoC 224 includes a Graphical Processing Unit 218 and a display controller 220. The Graphical Processing Unit 218 includes a render engine (not shown) that is configured to render a frame of a 3D model of a virtual object based on the virtual content provided by the AR application 210 and the pose of the AR display device 110. In other words, the Graphical Processing Unit 218 uses the three-dimensional pose of the AR display device 110 to generate frames of virtual content to be presented on the display 204. For example, the Graphical Processing Unit 218 uses the three-dimensional pose to render a frame of the virtual content such that the virtual content is presented at an appropriate orientation and position in the display 204 to properly augment the user's reality. As an example, the Graphical Processing Unit 218 may use the three-dimensional pose data to render a frame of virtual content such that, when presented on the display 204, the virtual content overlaps with a physical object in the user's real-world environment 102. The Graphical Processing Unit 218 generates updated frames of virtual content based on updated three-dimensional poses of the AR display device 110, which reflect changes in the position and orientation of the user in relation to physical objects in the user's real-world environment 102.

The Graphical Processing Unit 218 transfers the rendered frame to the display controller 220. The display controller 220 is positioned as an intermediary between the Graphical Processing Unit 218 and the display 204, receives the image data (e.g., rendered frame) from the Graphical Processing Unit 218, re-projects the frame (by performing a two-dimensional transformation) based on a latest pose of the AR display device 110, and provides the reprojected frame to the display 204. Examples of two-dimensional transformation operations include two-dimensional shift operation, two-dimensional rotation operation, and/or two-dimensional scaling operation. Applying the two-dimensional transformation to the frame using the display controller 220 (instead of the Graphical Processing Unit 218) preserves computation resources of the Graphical Processing Unit 218. In particular, the re-projection on the display controller 220 does not have to wait for resources from Graphical Processing Unit 218 to become available. As such, the re-projection operation does not preempt existing Graphical Processing Unit 218 workload. The preservation of computing resources from the Graphical Processing Unit 218 contributes to a reduction in motion-to-photon latency.

The storage device 206 stores virtual object content 222. The virtual object content 222 includes, for example, a database of visual references (e.g., images, QR codes) and corresponding virtual content (e.g., three-dimensional model of virtual objects).

Any one or more of the modules described herein may be implemented using hardware (e.g., a Processor of a machine) or a combination of hardware and software. For example, any module described herein may configure a Processor to perform the operations described herein for that module. Moreover, any two or more of these modules may be combined into a single module, and the functions described herein for a single module may be subdivided among multiple modules. Furthermore, according to various example embodiments, modules described herein as being implemented within a single machine, database, or device may be distributed across multiple machines, databases, or devices.

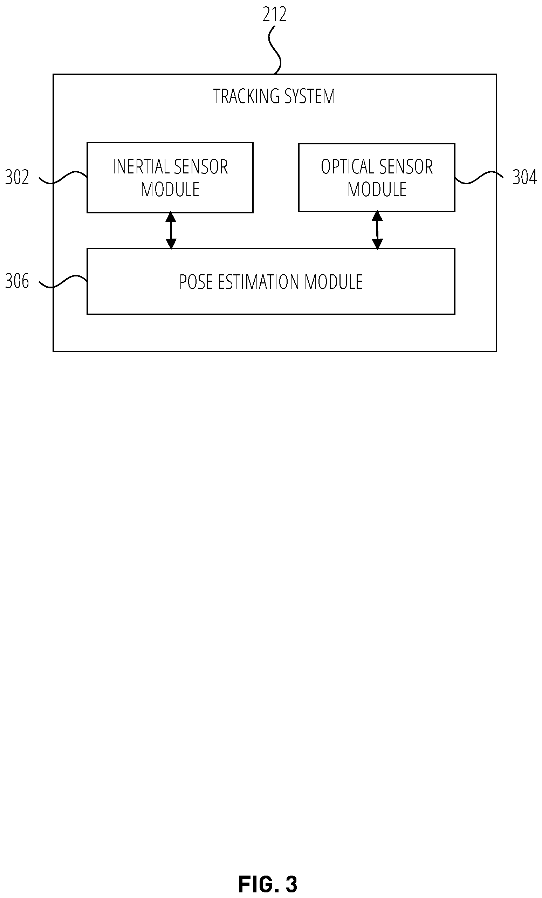

FIG. 3 illustrates the tracking system 212 in accordance with one example embodiment. The tracking system 212 includes, for example, an inertial sensor module 302, an optical sensor module 304, and a pose estimation module 306. The inertial sensor module 302 accesses inertial sensor data from the inertial sensor 216. The optical sensor module 304 accesses optical sensor data from the optical sensor 214.

The pose estimation module 306 determines a pose (e.g., location, position, orientation) of the AR display device 110 relative to a frame of reference (e.g., real-world environment 102). In one example embodiment, the pose estimation module 306 includes a visual odometry system that estimates the pose of the AR display device 110 based on 3D maps of feature points from images captured with the optical sensor 214 and the inertial sensor data captured with the inertial sensor 216. The optical sensor module 304 accesses image data from the optical sensor 214.

In one example embodiment, the pose estimation module 306 computes the position and orientation of the AR display device 110. The AR display device 110 includes one or more optical sensor 214 mounted on a rigid platform with one or more inertial sensor 216. The optical sensor 214 can be mounted with non-overlapping (distributed aperture) or overlapping (stereo or more) fields-of-view.

In some example embodiments, the pose estimation module 306 includes an algorithm that combines inertial information from the inertial sensor 216 and image information from the optical sensor 214 that are coupled to a rigid platform (e.g., AR display device 110) or a rig. In one embodiment, a rig may consist of multiple cameras mounted on a rigid platform with an inertial navigation unit (e.g., rig may thus have at least one inertial navigation unit and at least one camera. In another example embodiment, the presently described motion-to-photon latency optimization may operate with simpler tracking modules (e.g., one where only rotation is tracked) and thus do not require a camera.

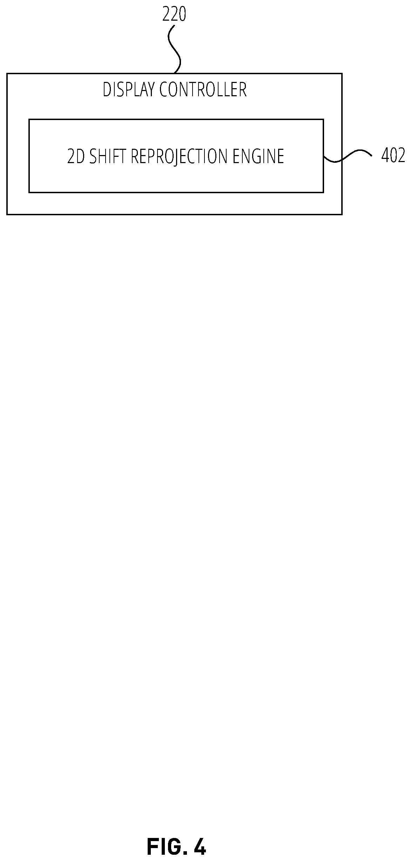

FIG. 4 is a block diagram illustrating a display controller 220 in accordance with one example embodiment. The display controller 220 includes a 2D shift reprojection engine 402. The 2D shift reprojection engine 402 accesses a latest pose of the AR display device 110 from the tracking system 212. The 2D shift reprojection engine 402 re-projects the rendered frame generated with the Graphical Processing Unit 218 using a global two-dimensional shift operation based on the pose of the AR display device 110 (used to compute the rendered frame), and the latest pose of the AR display device 110 (provided by the tracking system 212 to the display controller 220). Because the re-projection step includes a simpler global 2D shift (rather than 3D re-projection), the image transformation is simple enough so it can be performed by the display controller 220. The display controller 220 runs asynchronously to the Graphical Processing Unit 218 and therefore does not suffer from additional preemption cost of a Graphical Processing Unit 218-based re-projection algorithm.

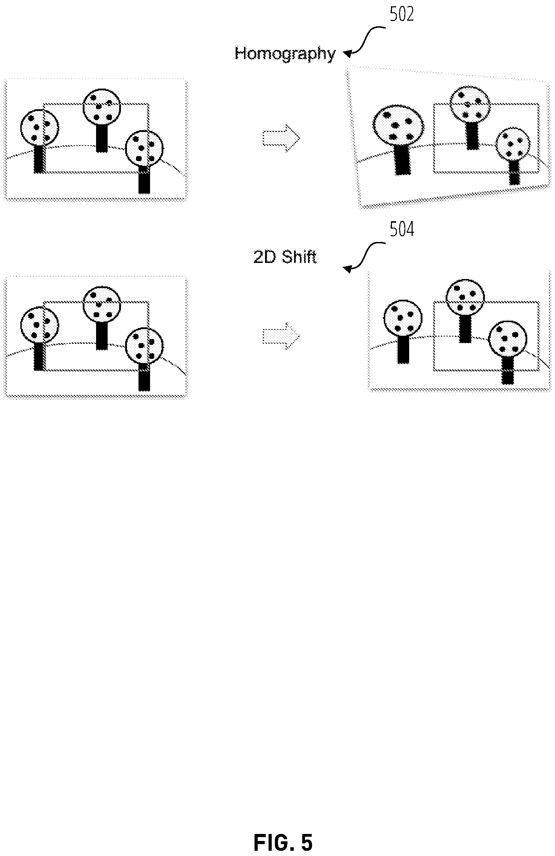

FIG. 5 illustrates an example of two-dimensional shift transformation in accordance with one embodiment. A homography-based image transformation 502 allows accurate reprojection of a 2D plane in 3D space but utilizes intensive computation resources that operates on the Graphical Processing Unit 218. The 2D shift transformation 504 is an operation that uses less computation resources than the homography-based image transformation 502 because the 2D shift transformation 504 only allows for simple 2D image operations (e.g., translations). As such, the 2D shift transformation 504 can be performed on a standard display controller 220.

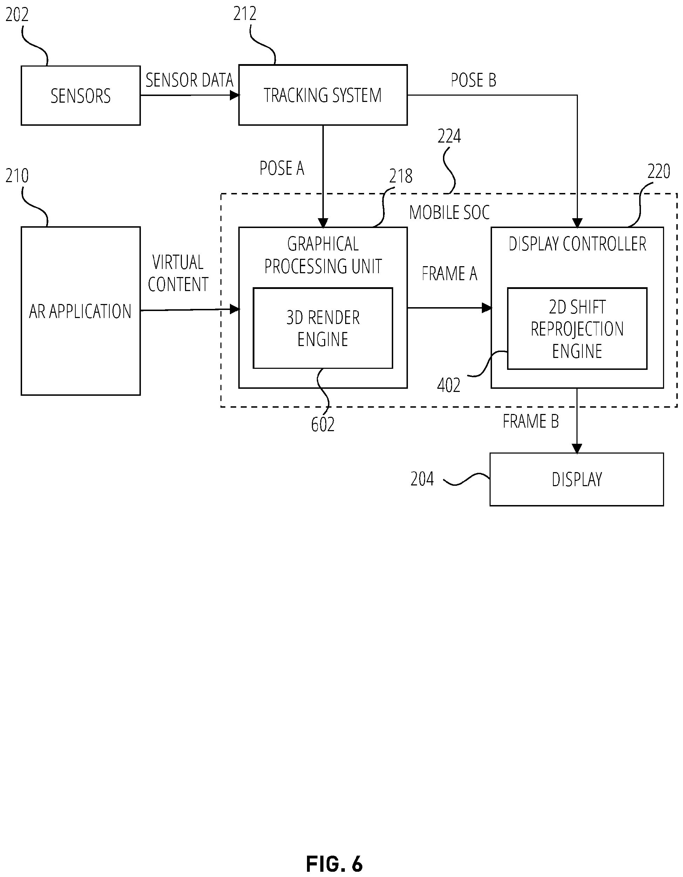

FIG. 6 is a block diagram illustrating an example process in accordance with one example embodiment. The tracking system 212 receives sensor data from sensors 202 to determine a pose (e.g., pose a) of the AR display device 110. The tracking system 212 provides the pose to the Graphical Processing Unit 218. The Graphical Processing Unit 218 uses a 3D render engine 602 to render a frame (e.g., frame a) of virtual content (provided by the AR application 210) and at a location (in the display 204) based on the pose (e.g., pose a) received from tracking system 212. The Graphical Processing Unit 218 provides the rendered frame (e.g., frame a) to the display controller 220.

The display controller 220 receives the latest pose (e.g., pose b) from the tracking system 212. In other words, pose b is a more recent pose of the AR display device 110 than pose a. The 2D shift reprojection engine 402 re-projects the rendered frame by performing a two-dimensional shift operation to the rendered frame (e.g., frame a) to generate a new frame (e.g., frame b). The display controller 220 communicates frame b to the display 204 for display.

FIG. 7 is a flow diagram illustrating a method for reducing latency in an AR display device in accordance with one example embodiment. Operations in the routine 700 may be performed by the AR display device 110, using Components (e.g., modules, engines) described above with respect to FIG. 2. Accordingly, the routine 700 is described by way of example with reference to the AR display device 110. However, it shall be appreciated that at least some of the operations of the routine 700 may be deployed on various other hardware configurations or be performed by similar Components residing elsewhere.

In block 702, the tracking system 212 determines a first pose of the AR display device 110. In block 704, the Graphical Processing Unit 218 accesses virtual content from the AR application 210. In block 706, the Graphical Processing Unit 218 renders a 3D model of the virtual content in a first frame using a render engine. In block 708, the tracking system 212 determines a second pose of the AR display device 110. In block 710, the display controller 220 applies a 2D global shift transformation to the first frame based on the second pose to generate a second frame using a 2D shift reprojection engine 402 of the display controller 220. In block 712, the display controller 220 communicates the second frame to the display 204 for display.

It is to be noted that other embodiments may use different sequencing, additional or fewer operations, and different nomenclature or terminology to accomplish similar functions. In some embodiments, various operations may be performed in parallel with other operations, either in a synchronous or asynchronous manner. The operations described herein were chosen to illustrate some principles of operations in a simplified form.

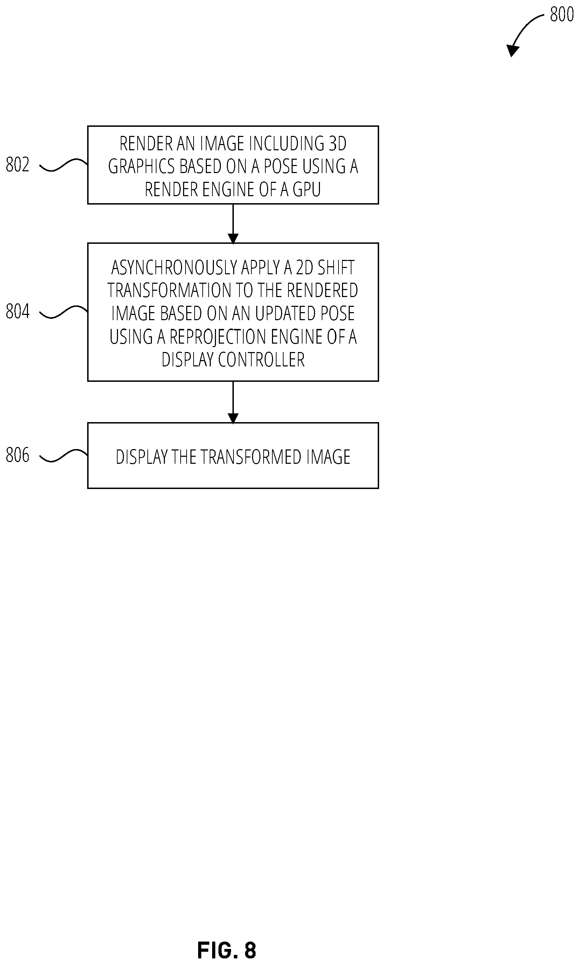

FIG. 8 is a flow diagram illustrating a method for reducing latency in an AR display device in accordance with one example embodiment. Operations in the routine 800 may be performed by the AR display device 110, using Components (e.g., modules, engines) described above with respect to FIG. 2. Accordingly, the routine 800 is described by way of example with reference to the AR display device 110. However, it shall be appreciated that at least some of the operations of the routine 800 may be deployed on various other hardware configurations or be performed by similar Components residing elsewhere.

In block 802, the 3D render engine 602 renders an image including 3D graphics based on a pose of the AR display device 110. In block 804, the display controller 220 asynchronously applies a 2D shift transformation to the rendered image based on an updated pose using the 2D shift reprojection engine 402 of the display controller 220. In block 806, the display 204 displays the transformed image.

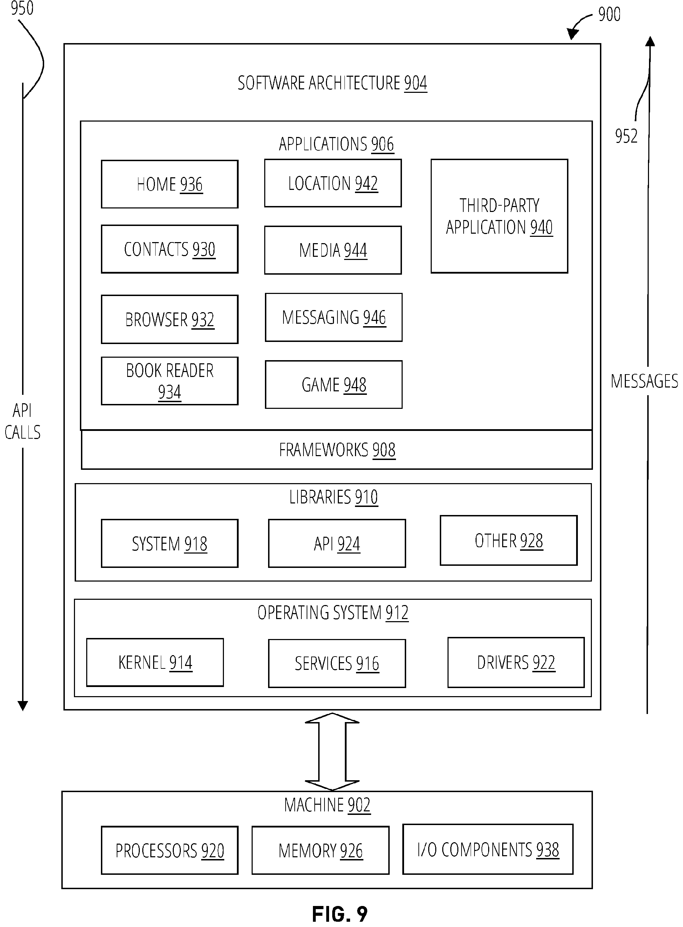

FIG. 9 is a block diagram 900 illustrating a software architecture 904, which can be installed on any one or more of the devices described herein. The software architecture 904 is supported by hardware such as a machine 902 that includes Processors 920, memory 926, and I/O Components 938. In this example, the software architecture 904 can be conceptualized as a stack of layers, where each layer provides a particular functionality. The software architecture 904 includes layers such as an operating system 912, libraries 910, frameworks 908, and applications 906. Operationally, the applications 906 invoke API calls 950 through the software stack and receive messages 952 in response to the API calls 950.

The operating system 912 manages hardware resources and provides common services. The operating system 912 includes, for example, a kernel 914, services 916, and drivers 922. The kernel 914 acts as an abstraction layer between the hardware and the other software layers. For example, the kernel 914 provides memory management, Processor management (e.g., scheduling), Component management, networking, and security settings, among other functionalities. The services 916 can provide other common services for the other software layers. The drivers 922 are responsible for controlling or interfacing with the underlying hardware. For instance, the drivers 922 can include display drivers, camera drivers, BLUETOOTH^{®} or BLUETOOTH^{®} Low Energy drivers, flash memory drivers, serial communication drivers (e.g., Universal Serial Bus (USB) drivers), WI-FI^{®} drivers, audio drivers, power management drivers, and so forth.

The libraries 910 provide a low-level common infrastructure used by the applications 906. The libraries 910 can include system libraries 918 (e.g., C standard library) that provide functions such as memory allocation functions, string manipulation functions, mathematic functions, and the like. In addition, the libraries 910 can include API libraries 924 such as media libraries (e.g., libraries to support presentation and manipulation of various media formats such as Moving Picture Experts Group-4 (MPEG4), Advanced Video Coding (H.264 or AVC), Moving Picture Experts Group Layer-3 (MP3), Advanced Audio Coding (AAC), Adaptive Multi-Rate (AMR) audio codec, Joint Photographic Experts Group (JPEG or JPG), or Portable Network Graphics (PNG)), graphics libraries (e.g., an OpenGL framework used to render in two dimensions (2D) and three dimensions (3D) in a graphic content on a display), database libraries (e.g., SQLite to provide various relational database functions), web libraries (e.g., WebKit to provide web browsing functionality), and the like. The libraries 910 can also include a wide variety of other libraries 928 to provide many other APIs to the applications 906.

The frameworks 908 provide a high-level common infrastructure that is used by the applications 906. For example, the frameworks 908 provide various graphical user interface (GUI) functions, high-level resource management, and high-level location services. The frameworks 908 can provide a broad spectrum of other APIs that can be used by the applications 906, some of which may be specific to a particular operating system or platform.

In an example embodiment, the applications 906 may include a home application 936, a contacts application 930, a browser application 932, a book reader application 934, a location application 942, a media application 944, a messaging application 946, a game application 948, and a broad assortment of other applications such as a third-party application 940. The applications 906 are programs that execute functions defined in the programs. Various programming languages can be employed to create one or more of the applications 906, structured in a variety of manners, such as object-oriented programming languages (e.g., Objective-C, Java, or C++) or procedural programming languages (e.g., C or assembly language). In a specific example, the third-party application 940 (e.g., an application developed using the ANDROID^{™} or IOS^{™} software development kit (SDK) by an entity other than the vendor of the particular platform) may be mobile software running on a mobile operating system such as IOS^{™}, ANDROID^{™}, WINDOWS^{®} Phone, or Linux OS, or other mobile operating systems. In this example, the third-party application 940 can invoke the API calls 950 provided by the operating system 912 to facilitate functionality described herein.

FIG. 10 is a diagrammatic representation of the machine 1000 within which instructions 1008 (e.g., software, a program, an application, an applet, an app, or other executable code) for causing the machine 1000 to perform any one or more of the methodologies discussed herein may be executed. For example, the instructions 1008 may cause the machine 1000 to execute any one or more of the methods described herein. The instructions 1008 transform the general, non-programmed machine 1000 into a particular machine 1000 programmed to carry out the described and illustrated functions in the manner described. The machine 1000 may operate as a standalone device or may be coupled (e.g., networked) to other machines. In a networked deployment, the machine 1000 may operate in the capacity of a server machine or a client machine in a server-client network environment, or as a peer machine in a peer-to-peer (or distributed) network environment. The machine 1000 may comprise, but not be limited to, a server computer, a client computer, a personal computer (PC), a tablet computer, a laptop computer, a netbook, a set-top box (STB), a PDA, an entertainment media system, a cellular telephone, a smart phone, a mobile device, a wearable device (e.g., a smart watch), a smart home device (e.g., a smart appliance), other smart devices, a web appliance, a network router, a network switch, a network bridge, or any machine capable of executing the instructions 1008, sequentially or otherwise, that specify actions to be taken by the machine 1000. Further, while only a single machine 1000 is illustrated, the term "machine" shall also be taken to include a collection of machines that individually or jointly execute the instructions 1008 to perform any one or more of the methodologies discussed herein.

The machine 1000 may include Processors 1002, memory 1004, and I/O Components 1042, which may be configured to communicate with each other via a bus 1044. In an example embodiment, the Processors 1002 (e.g., a Central Processing Unit (CPU), a Reduced Instruction Set Computing (RISC) Processor, a Complex Instruction Set Computing (CISC) Processor, a Graphics Processing Unit (GPU), a Digital Signal Processor (DSP), an ASIC, a Radio-Frequency Integrated Circuit (RFIC), another Processor, or any suitable combination thereof) may include, for example, a Processor 1006 and a Processor 1010 that execute the instructions 1008. The term "Processor" is intended to include multi-core Processors that may comprise two or more independent Processors (sometimes referred to as "cores") that may execute instructions contemporaneously. Although FIG. 10 shows multiple Processors 1002, the machine 1000 may include a single Processor with a single core, a single Processor with multiple cores (e.g., a multi-core Processor), multiple Processors with a single core, multiple Processors with multiples cores, or any combination thereof.

The memory 1004 includes a main memory 1012, a static memory 1014, and a storage unit 1016, both accessible to the Processors 1002 via the bus 1044. The main memory 1004, the static memory 1014, and storage unit 1016 store the instructions 1008 embodying any one or more of the methodologies or functions described herein. The instructions 1008 may also reside, completely or partially, within the main memory 1012, within the static memory 1014, within machine-readable medium 1018 within the storage unit 1016, within at least one of the Processors 1002 (e.g., within the Processor's cache memory), or any suitable combination thereof, during execution thereof by the machine 1000.

The I/O Components 1042 may include a wide variety of Components to receive input, provide output, produce output, transmit information, exchange information, capture measurements, and so on. The specific I/O Components 1042 that are included in a particular machine will depend on the type of machine. For example, portable machines such as mobile phones may include a touch input device or other such input mechanisms, while a headless server machine will likely not include such a touch input device. It will be appreciated that the I/O Components 1042 may include many other Components that are not shown in FIG. 10. In various example embodiments, the I/O Components 1042 may include output Components 1028 and input Components 1030. The output Components 1028 may include visual Components (e.g., a display such as a plasma display panel (PDP), a light emitting diode (LED) display, a liquid crystal display (LCD), a projector, or a cathode ray tube (CRT)), acoustic Components (e.g., speakers), haptic Components (e.g., a vibratory motor, resistance mechanisms), other signal generators, and so forth. The input Components 1030 may include alphanumeric input Components (e.g., a keyboard, a touch screen configured to receive alphanumeric input, a photo-optical keyboard, or other alphanumeric input Components), point-based input Components (e.g., a mouse, a touchpad, a trackball, a joystick, a motion sensor, or another pointing instrument), tactile input Components (e.g., a physical button, a touch screen that provides location and/or force of touches or touch gestures, or other tactile input Components), audio input Components (e.g., a microphone), and the like.

In further example embodiments, the I/O Components 1042 may include biometric Components 1032, motion Components 1034, environmental Components 1036, or position Components 1038, among a wide array of other Components. For example, the biometric Components 1032 include Components to detect expressions (e.g., hand expressions, facial expressions, vocal expressions, body gestures, or eye tracking), measure biosignals (e.g., blood pressure, heart rate, body temperature, perspiration, or brain waves), identify a person (e.g., voice identification, retinal identification, facial identification, fingerprint identification, or electroencephalogram-based identification), and the like. The motion Components 1034 include acceleration sensor Components (e.g., accelerometer), gravitation sensor Components, rotation sensor Components (e.g., gyroscope), and so forth. The environmental Components 1036 include, for example, illumination sensor Components (e.g., photometer), temperature sensor Components (e.g., one or more thermometers that detect ambient temperature), humidity sensor Components, pressure sensor Components (e.g., barometer), acoustic sensor Components (e.g., one or more microphones that detect background noise), proximity sensor Components (e.g., infrared sensors that detect nearby objects), gas sensors (e.g., gas detection sensors to detection concentrations of hazardous gases for safety or to measure pollutants in the atmosphere), or other Components that may provide indications, measurements, or signals corresponding to a surrounding physical environment. The position Components 1038 include location sensor Components (e.g., a GPS receiver Component), altitude sensor Components (e.g., altimeters or barometers that detect air pressure from which altitude may be derived), orientation sensor Components (e.g., magnetometers), and the like.

Communication may be implemented using a wide variety of technologies. The I/O Components 1042 further include communication Components 1040 operable to couple the machine 1000 to a network 1020 or devices 1022 via a coupling 1024 and a coupling 1026, respectively. For example, the communication Components 1040 may include a network interface Component or another suitable device to interface with the network 1020. In further examples, the communication Components 1040 may include wired communication Components, wireless communication Components, cellular communication Components, Near Field Communication (NFC) Components, Bluetooth^{®} Components (e.g., Bluetooth^{®} Low Energy), Wi-Fi^{®} Components, and other communication Components to provide communication via other modalities. The devices 1022 may be another machine or any of a wide variety of peripheral devices (e.g., a peripheral device coupled via a USB).

Moreover, the communication Components 1040 may detect identifiers or include Components operable to detect identifiers. For example, the communication Components 1040 may include Radio Frequency Identification (RFID) tag reader Components, NFC smart tag detection Components, optical reader Components (e.g., an optical sensor to detect one-dimensional bar codes such as Universal Product Code (UPC) bar code, multi-dimensional bar codes such as Quick Response (QR) code, Aztec code, Data Matrix, Dataglyph, MaxiCode, PDF417, Ultra Code, UCC RSS-2D bar code, and other optical codes), or acoustic detection Components (e.g., microphones to identify tagged audio signals). In addition, a variety of information may be derived via the communication Components 1040, such as location via Internet Protocol (IP) geolocation, location via Wi-Fi^{®} signal triangulation, location via detecting an NFC beacon signal that may indicate a particular location, and so forth.

The various memories (e.g., memory 1004, main memory 1012, static memory 1014, and/or memory of the Processors 1002) and/or storage unit 1016 may store one or more sets of instructions and data structures (e.g., software) embodying or used by any one or more of the methodologies or functions described herein. These instructions (e.g., the instructions 1008), when executed by Processors 1002, cause various operations to implement the disclosed embodiments.

The instructions 1008 may be transmitted or received over the network 1020, using a transmission medium, via a network interface device (e.g., a network interface Component included in the communication Components 1040) and using any one of a number of well-known transfer protocols (e.g., hypertext transfer protocol (HTTP)). Similarly, the instructions 1008 may be transmitted or received using a transmission medium via the coupling 1026 (e.g., a peer-to-peer coupling) to the devices 1022.

## Claims

1. A method for reducing motion-to-photon latency in an augmented reality, AR, display device (110) comprising:
generating (802), using a render engine (602) of a Graphical Processing Unit, GPU (218), of the AR display device, a first image including a rendered 3D model of virtual content based on a first pose of the AR display device;
in response to generating the first image, preserving computation resources of the GPU by generating, using a display controller at the AR display device, a second image without preempting existing GPU (218) workload, the second image being generated based on a second pose of the AR display device by applying (804), using a reprojection engine (402) of a display controller (220) of the AR display device without the render engine (602), a two-dimensional shift transformation to the first image based on the second pose to generate the second image; and
displaying (806) the second image in a display (204) of the AR display device;
wherein the reprojection engine (402) of the display controller (220) operates asynchronously and independently from the render engine (602) of the GPU (218).

2. The method of claim 1, wherein the display comprises a see-through display and wherein the method comprises:
displaying the first image in a see-through display (204) of the AR display device; and
displaying (806) the second image after the first image in the see-through display (204) of the AR display device.

3. The method of claim 1, further comprising:
accessing first sensor data from a plurality of sensors of the AR display device at a first time;
determining, using a tracking system of the AR display device, the first pose of the AR display device based on the first sensor data;
accessing second sensor data from the plurality of sensors of the AR display device at a second time that is subsequent to the first time; and
determining, using the tracking system of the AR display device, the second pose of the AR display device based on the second sensor data.

4. The method of claim 1, further comprising:
generating, using an AR application of the AR display device, the virtual content.

5. The method of claim 1, wherein the two-dimensional transformation comprises a global two-dimensional shift operation, rotation operation, or scaling operation of the 3D model of the virtual content in the image.

6. The method of claim 1, wherein the display controller (220) comprises a non-customized display controller.

7. A computing apparatus comprising:
a processor (1002); and
a memory (1004) storing instructions that, when executed by the processor (1002), configure the apparatus to:
generate (802), using a render engine (602) of a Graphical Processing Unit, GPU (218), of an augmented reality, AR, display
device (110), a first image including a rendered 3D model of virtual content based on a first pose of the AR display device;
in response to generating the first image, preserve computation resources of the GPU by generating, using a display controller at the AR display device, a second image without preempting existing GPU (218) workload, the second image being generated based on a second pose of the AR display device by applying (804), using a reprojection engine (402) of a display controller (220) of the AR display device without the render engine (602), a two-dimensional shift transformation to the first image based on the second pose to generate the second image; and
display (806) the second image in a display (204) of the AR display device;
wherein the reprojection engine (402) of the display controller (220) operates asynchronously and independently from the render engine (602) of the GPU (218).

8. The computing apparatus of claim 7, wherein the instructions further configure the apparatus to:
access first sensor data from a plurality of sensors (202) of the AR display device at a first time;
determine, using a tracking system (212) of the AR display device, the first pose of the AR display device based on the first sensor data;
access second sensor data from the plurality of sensors (202) of the AR display device at a second time that is subsequent to the first time; and
determine, using the tracking system (212) of the AR display device, the second pose of the AR display device based on the second sensor data.

9. The computing apparatus of claim 7, wherein the instructions further configure the apparatus to:
generate, using an AR application (210) of the AR display device, the virtual content.

10. The computing apparatus of claim 7, wherein the two-dimensional transformation comprises a global two-dimensional shift operation, rotation operation, or scaling operation of the 3D model of the virtual content in the image.

11. The computing apparatus of claim 7, wherein the display controller (220) comprises a non-customized display controller.

12. A non-transitory computer-readable storage medium, the computer-readable storage medium including instructions that when executed by a computer, cause the computer to:
generate (802), using a render engine (602) of a Graphical Processing Unit, GPU (218), of an augmented reality, AR, display device (110), a first image including a rendered 3D model of virtual content based on a first pose of the AR display device;
in response to generating the first image, preserve computation resources of the GPU by generating, using a display controller at the AR display device, a second image without preempting existing GPU (218) workload, the second image being generated based on a second pose of the AR display device by applying (804), using a reprojection engine (402) of a display controller (220) of the AR display device without the render engine (602), a two-dimensional shift transformation to the first image based on the second pose to generate the second image; and
display (806) the second image in a display (204) of the AR display device;
wherein the reprojection engine (402) of the display controller (220) operates asynchronously and independently from the render engine (602) of the GPU (218).

13. The computer-readable storage medium of claim 12, wherein the instructions further configure the computer to:
access first sensor data from a plurality of sensors (202) of the AR display device at a first time;
determine, using a tracking system (212) of the AR display device, the first pose of the AR display device based on the first sensor data; and
access second sensor data from the plurality of sensors (202) of the AR display device at a second time that is subsequent to the first time; and
determine, using the tracking system (212) of the AR display device, the second pose of the AR display device based on the second sensor data.

14. The computer-readable storage medium of claim 12, wherein the instructions further configure the computer to:
generate, using an AR application of the AR display device, the virtual content.

## Patentansprüche

1. Verfahren zum Reduzieren der Bewegung-zu-Photon-Latenz in einer Anzeigevorrichtung (110) für erweiterte Realität, AR, Folgendes umfassend:
Generieren (802), unter Verwendung einer Render-Engine (602) einer graphischen Verarbeitungseinheit, GPU (218), der AR-Anzeigevorrichtung, eines ersten Bildes, das ein gerendertes 3D-Modell von virtuellem Inhalt beinhaltet, basierend auf einer ersten Pose der AR-Anzeigevorrichtung;
in Reaktion auf das Generieren des ersten Bildes, Schonen von Rechenressourcen der GPU durch Generieren, unter Verwendung einer Anzeigesteuerung in der AR-Anzeigevorrichtung, eines zweiten Bildes, ohne die bestehende GPU(218)-Arbeitslast vorzubelegen, wobei das zweite Bild basierend auf einer zweiten Pose der AR-Anzeigevorrichtung generiert wird durch Anwenden (804), unter Verwendung einer Neuprojektions-Engine (402) einer Anzeigesteuerung (220) der AR-Anzeigevorrichtung ohne die Render-Engine (602), einer zweidimensionalen Verschiebungstransformation auf das erste Bild basierend auf der zweiten Pose, um das zweite Bild zu generieren; und
Anzeigen (806) des zweiten Bildes in einer Anzeige (204) der AR-Anzeigevorrichtung;
wobei die Neuprojektions-Engine (402) der Anzeigesteuerung (220) asynchron zu und unabhängig von der Render-Engine (602) der GPU (218) arbeitet.

2. Verfahren nach Anspruch 1, wobei die Anzeige eine transparente Anzeige umfasst und wobei das Verfahren Folgendes umfasst:
Anzeigen des ersten Bildes in einer transparenten Anzeige (204) der AR-Anzeigevorrichtung; und
Anzeigen (806) des zweiten Bildes nach dem ersten Bild in der transparenten Anzeige (204) der AR-Anzeigevorrichtung.

3. Verfahren nach Anspruch 1, ferner Folgendes umfassend:
Zugreifen auf erste Sensordaten von einer Vielzahl von Sensoren der AR-Anzeigevorrichtung zu einem ersten Zeitpunkt;
Bestimmen, unter Verwendung eines Nachverfolgungssystems der AR-Anzeigevorrichtung, der ersten Pose der AR-Anzeigevorrichtung basierend auf den ersten Sensordaten;
Zugreifen auf zweite Sensordaten von der Vielzahl von Sensoren der AR-Anzeigevorrichtung zu einem zweiten Zeitpunkt, der nach dem ersten Zeitpunkt liegt; und
Bestimmen, unter Verwendung des Nachverfolgungssystems der AR-Anzeigevorrichtung, der zweiten Pose der AR-Anzeigevorrichtung basierend auf den zweiten Sensordaten.

4. Verfahren nach Anspruch 1, ferner Folgendes umfassend:
Generieren, unter Verwendung einer AR-Anwendung der AR-Anzeigevorrichtung, des virtuellen Inhalts.

5. Verfahren nach Anspruch 1, wobei die zweidimensionale Transformation eine globale zweidimensionale Verschiebungsoperation, eine Drehungsoperation oder eine Skalierungsoperation des 3D-Modells des virtuellen Inhalts in dem Bild umfasst.

6. Verfahren nach Anspruch 1, wobei die Anzeigesteuerung (220) eine nicht individuell angepasste Anzeigesteuerung umfasst.

7. Recheneinrichtung, umfassend:
einen Prozessor (1002); und
einen Speicher (1004), der Anweisungen speichert, die, wenn sie von dem Prozessor (1002) ausgeführt werden, die Einrichtung zu Folgendem konfigurieren:
Generieren (802), unter Verwendung einer Render-Engine (602) einer graphischen Verarbeitungseinheit, GPU (218), einer Anzeigevorrichtung (110) für erweiterte Realität, AR,
eines ersten Bildes, das ein gerendertes 3D-Modell von virtuellem Inhalt beinhaltet, basierend auf einer ersten Pose der AR-Anzeigevorrichtung;
in Reaktion auf das Generieren des ersten Bildes, Schonen von Rechenressourcen der GPU durch Generieren, unter Verwendung einer Anzeigesteuerung in der AR-Anzeigevorrichtung, eines zweiten Bildes, ohne die bestehende GPU(218)-Arbeitslast vorzubelegen, wobei das zweite Bild basierend auf einer zweiten Pose der AR-Anzeigevorrichtung generiert wird durch Anwenden (804), unter Verwendung einer Neuprojektions-Engine (402) einer Anzeigesteuerung (220) der AR-Anzeigevorrichtung ohne die Render-Engine (602), einer zweidimensionalen Verschiebungstransformation auf das erste Bild basierend auf der zweiten Pose, um das zweite Bild zu generieren; und
Anzeigen (806) des zweiten Bildes in einer Anzeige (204) der AR-Anzeigevorrichtung;
wobei die Neuprojektions-Engine (402) der Anzeigesteuerung (220) asynchron zu und unabhängig von der Render-Engine (602) der GPU (218) arbeitet.

8. Recheneinrichtung nach Anspruch 7, wobei die Anweisungen die Einrichtung ferner zu Folgendem konfigurieren:
Zugreifen auf erste Sensordaten von einer Vielzahl von Sensoren (202) der AR-Anzeigevorrichtung zu einem ersten Zeitpunkt;
Bestimmen, unter Verwendung eines Nachverfolgungssystems (212) der AR-Anzeigevorrichtung, der ersten Pose der AR-Anzeigevorrichtung basierend auf den ersten Sensordaten;
Zugreifen auf zweite Sensordaten von der Vielzahl von Sensoren (202) der AR-Anzeigevorrichtung zu einem zweiten Zeitpunkt, der nach dem ersten Zeitpunkt liegt; und
Bestimmen, unter Verwendung des Nachverfolgungssystems (212) der AR-Anzeigevorrichtung, der zweiten Pose der AR-Anzeigevorrichtung basierend auf den zweiten Sensordaten.

9. Recheneinrichtung nach Anspruch 7, wobei die Anweisungen die Einrichtung ferner zu Folgendem konfigurieren:
Generieren, unter Verwendung einer AR-Anwendung (210) der AR-Anzeigevorrichtung, des virtuellen Inhalts.

10. Recheneinrichtung nach Anspruch 7, wobei die zweidimensionale Transformation eine globale zweidimensionale Verschiebungsoperation, eine Drehungsoperation oder eine Skalierungsoperation des 3D-Modells des virtuellen Inhalts in dem Bild umfasst.

11. Recheneinrichtung nach Anspruch 7, wobei die Anzeigesteuerung (220) eine nicht individuell angepasste Anzeigesteuerung umfasst.

12. Nichtflüchtiges computerlesbares Medium, wobei das computerlesbare Speichermedium Anweisungen beinhaltet, die bei Ausführung durch einen Computer den Computer zu Folgendem veranlassen:
Generieren (802), unter Verwendung einer Render-Engine (602) einer graphischen Verarbeitungseinheit, GPU (218), einer Anzeigevorrichtung (110) für erweiterte Realität, AR,
eines ersten Bildes, das ein gerendertes 3D-Modell von virtuellem Inhalt beinhaltet, basierend auf einer ersten Pose der AR-Anzeigevorrichtung;
in Reaktion auf das Generieren des ersten Bildes, Schonen von Rechenressourcen der GPU durch Generieren, unter Verwendung einer Anzeigesteuerung in der AR-Anzeigevorrichtung, eines zweiten Bildes, ohne die bestehende GPU(218)-Arbeitslast vorzubelegen, wobei das zweite Bild basierend auf einer zweiten Pose der AR-Anzeigevorrichtung generiert wird durch Anwenden (804), unter Verwendung einer Neuprojektions-Engine (402) einer Anzeigesteuerung (220) der AR-Anzeigevorrichtung ohne die Render-Engine (602), einer zweidimensionalen Verschiebungstransformation auf das erste Bild basierend auf der zweiten Pose, um das zweite Bild zu generieren; und
Anzeigen (806) des zweiten Bildes in einer Anzeige (204) der AR-Anzeigevorrichtung;
wobei die Neuprojektions-Engine (402) der Anzeigesteuerung (220) asynchron zu und unabhängig von der Render-Engine (602) der GPU (218) arbeitet.

13. Computerlesbares Medium nach Anspruch 12, wobei die Anweisungen den Computer ferner zu Folgendem konfigurieren:
Zugreifen auf erste Sensordaten von einer Vielzahl von Sensoren (202) der AR-Anzeigevorrichtung zu einem ersten Zeitpunkt;
Bestimmen, unter Verwendung eines Nachverfolgungssystems (212) der AR-Anzeigevorrichtung, der ersten Pose der AR-Anzeigevorrichtung basierend auf den ersten Sensordaten; und
Zugreifen auf zweite Sensordaten von der Vielzahl von Sensoren (202) der AR-Anzeigevorrichtung zu einem zweiten Zeitpunkt, der nach dem ersten Zeitpunkt liegt; und
Bestimmen, unter Verwendung des Nachverfolgungssystems (212) der AR-Anzeigevorrichtung, der zweiten Pose der AR-Anzeigevorrichtung basierend auf den zweiten Sensordaten.

14. Computerlesbares Medium nach Anspruch 12, wobei die Anweisungen den Computer ferner zu Folgendem konfigurieren:
Generieren, unter Verwendung einer AR-Anwendung der AR-Anzeigevorrichtung, des virtuellen Inhalts.

## Revendications

1. Procédé de réduction de la latence mouvement-à-photon dans un dispositif d'affichage de réalité augmentée (AR) (110), consistant à :
générer (802), au moyen d'un moteur de rendu (602) d'une unité de traitement graphique (GPU) (218) du dispositif d'affichage AR, une première image comprenant un modèle 3D rendu de contenu virtuel sur la base d'une première pose du dispositif d'affichage AR ;
en réponse à la génération de la première image, préserver les ressources de calcul de la GPU en générant, au moyen d'un dispositif de commande d'affichage au niveau du dispositif d'affichage AR, une seconde image sans interrompre une charge de travail existante de la GPU (218), la seconde image étant générée sur la base d'une seconde pose du dispositif d'affichage AR en appliquant (804), au moyen d'un moteur de reprojection (402) d'un dispositif de commande d'affichage (220) du dispositif d'affichage AR sans le moteur de rendu (602), une transformation de décalage bidimensionnelle à la première image sur la base de la seconde pose pour générer la seconde image ; et
afficher (806) la seconde image sur une unité d'affichage (204) du dispositif d'affichage AR ;
le moteur de reprojection (402) du dispositif de commande d'affichage (220) fonctionnant de manière asynchrone et indépendante du moteur de rendu (602) de la GPU (218).

2. Procédé selon la revendication 1, l'unité d'affichage comprenant une unité d'affichage transparente et le procédé consistant à :
afficher la première image sur une unité d'affichage transparente (204) du dispositif d'affichage AR ; et
afficher (806) la seconde image après la première image sur l'unité d'affichage transparente (204) du dispositif d'affichage AR.

3. Procédé selon la revendication 1, consistant en outre à :
accéder à des premières données de capteur parmi une pluralité de capteurs du dispositif d'affichage AR à un premier moment ;
déterminer, au moyen d'un système de suivi du dispositif d'affichage AR, la première pose du dispositif d'affichage AR sur la base des premières données de capteur ;
accéder à des secondes données de capteur parmi la pluralité de capteurs du dispositif d'affichage AR à un second moment qui est postérieur au premier moment ; et
déterminer, au moyen du système de suivi du dispositif d'affichage AR, la seconde pose du dispositif d'affichage AR sur la base des secondes données de capteur.

4. Procédé selon la revendication 1, consistant en outre à :
générer, au moyen d'une application AR du dispositif d'affichage AR, le contenu virtuel.

5. Procédé selon la revendication 1, la transformation bidimensionnelle comprenant une opération de décalage bidimensionnelle globale, une opération de rotation ou une opération de mise à l'échelle du modèle 3D du contenu virtuel dans l'image.

6. Procédé selon la revendication 1, le dispositif de commande d'affichage (220) comprenant un dispositif de commande d'affichage non personnalisé.

7. Appareil informatique comprenant :
un processeur (1002) ; et
une mémoire (1004) stockant des instructions qui, lorsqu'elles sont exécutées par le processeur (1002), configurent l'appareil pour :
générer (802), au moyen d'un moteur de rendu (602) d'une unité de traitement graphique (GPU) (218) d'un dispositif d'affichage de réalité augmentée (AR) (110), une première image comprenant un modèle 3D rendu de contenu virtuel sur la base d'une première pose du dispositif d'affichage AR ;
en réponse à la génération de la première image, préserver les ressources de calcul de la GPU en générant, au moyen d'un dispositif de commande d'affichage au niveau du dispositif d'affichage AR, une seconde image sans interrompre une charge de travail existante de la GPU (218), la seconde image étant générée sur la base d'une seconde pose du dispositif d'affichage AR en appliquant (804), au moyen d'un moteur de reprojection (402) d'un dispositif de commande d'affichage (220) du dispositif d'affichage AR sans le moteur de rendu (602), une transformation de décalage bidimensionnelle à la première image sur la base de la seconde pose pour générer la seconde image ; et
afficher (806) la seconde image sur une unité d'affichage (204) du dispositif d'affichage AR ;
le moteur de reprojection (402) du dispositif de commande d'affichage (220) fonctionnant de manière asynchrone et indépendante du moteur de rendu (602) de la GPU (218).

8. Appareil informatique selon la revendication 7, les instructions configurant en outre l'appareil pour :
accéder à des premières données de capteur parmi une pluralité de capteurs (202) du dispositif d'affichage AR à un premier moment ;
déterminer, au moyen d'un système de suivi (212) du dispositif d'affichage AR, la première pose du dispositif d'affichage AR sur la base des premières données de capteur ;
accéder à des secondes données de capteur parmi la pluralité de capteurs (202) du dispositif d'affichage AR à un second moment qui est postérieur au premier moment ; et
déterminer, au moyen du système de suivi (212) du dispositif d'affichage AR, la seconde pose du dispositif d'affichage AR sur la base des secondes données de capteur.

9. Appareil informatique selon la revendication 7, les instructions configurant en outre l'appareil pour :
générer, au moyen d'une application AR (210) du dispositif d'affichage AR, le contenu virtuel.

10. Appareil informatique selon la revendication 7, la transformation bidimensionnelle comprenant une opération de décalage bidimensionnelle globale, une opération de rotation ou une opération de mise à l'échelle du modèle 3D du contenu virtuel dans l'image.

11. Appareil informatique selon la revendication 7, le dispositif de commande d'affichage (220) comprenant un dispositif de commande d'affichage non personnalisé.

12. Support de stockage non transitoire lisible par ordinateur, le support de stockage lisible par ordinateur comprenant des instructions qui, lorsqu'elles sont exécutées par un ordinateur, amènent l'ordinateur à :
générer (802), au moyen d'un moteur de rendu (602) d'une unité de traitement graphique (GPU) (218) d'un dispositif d'affichage de réalité augmentée (AR) (110), une première image comprenant un modèle 3D rendu de contenu virtuel sur la base d'une première pose du dispositif d'affichage AR ;
en réponse à la génération de la première image, préserver les ressources de calcul de la GPU en générant, au moyen d'un dispositif de commande d'affichage au niveau du dispositif d'affichage AR, une seconde image sans interrompre une charge de travail existante de la GPU (218), la seconde image étant générée sur la base d'une seconde pose du dispositif d'affichage AR en appliquant (804), au moyen d'un moteur de reprojection (402) d'un dispositif de commande d'affichage (220) du dispositif d'affichage AR sans le moteur de rendu (602), une transformation de décalage bidimensionnelle à la première image sur la base de la seconde pose pour générer la seconde image ; et
afficher (806) la seconde image sur une unité d'affichage (204) du dispositif d'affichage AR ;
le moteur de reprojection (402) du dispositif de commande d'affichage (220) fonctionnant de manière asynchrone et indépendante du moteur de rendu (602) de la GPU (218).

13. Support de stockage lisible par ordinateur selon la revendication 12, les instructions configurant en outre l'ordinateur pour :
accéder à des premières données de capteur parmi une pluralité de capteurs (202) du dispositif d'affichage AR à un premier moment ;
déterminer, au moyen d'un système de suivi (212) du dispositif d'affichage AR, la première pose du dispositif d'affichage AR sur la base des premières données de capteur ; et
accéder à des secondes données de capteur parmi la pluralité de capteurs (202) du dispositif d'affichage AR à un second moment qui est postérieur au premier moment ; et
déterminer, au moyen du système de suivi (212) du dispositif d'affichage AR, la seconde pose du dispositif d'affichage AR sur la base des secondes données de capteur.

14. Support de stockage lisible par ordinateur selon la revendication 12, les instructions configurant en outre l'ordinateur pour :
générer, au moyen d'une application AR du dispositif d'affichage AR, le contenu virtuel.
